# EUROPÄISCHE PATENTSCHRIFT

(11) **EP 3 916 844 B1**
(45) Veröffentlichungstag und Bekanntmachung des Hinweises auf die Patenterteilung: **07.05.2025**
(21) Anmeldenummer: 21174277.0
(22) Anmeldetag: 18.05.2021
(51) Int. Cl.: H01M 4/04, H01M 10/04, H01M 10/0525, H01M 4/62

(54) **VERFAHREN ZUR LÖSUNGSMITTELFREIEN BESCHICHTUNG VON FOLIEN FÜR ELEKTROCHEMISCHE ANWENDUNGEN**
METHOD FOR SOLVENT-FREE COATING OF FILMS FOR ELECTROCHEMICAL APPLICATIONS
PROCÉDÉ DE REVÊTEMENT SANS SOLVANT DES FEUILLES POUR APPLICATIONS ÉLECTROCHIMIQUES

(30) Priorität: 25.05.2020 DE 102020113926
(43) Veröffentlichungstag der Anmeldung: 01.12.2021
(73) Patentinhaber: Fraunhofer-Gesellschaft zur Förderung der angewandten Forschung e.V., 80686 München (DE)
(72) Erfinder: Ophey, Jannes Marten, 25524 Itzehoe (DE); Würsig, Andreas, 25524 Itzehoe (DE)
(74) Vertreter: Strehl & Partner mbB

(56) Entgegenhaltungen:
- US-A1- 2005 285 080
- US-A1- 2012 040 243
- US-A1- 2016 181 651

## Beschreibung

### Gebiet der Erfindung

Die vorliegende Erfindung betrifft ein Verfahren zur lösemittelfreien Herstellung einer beschichteten Folie für die Verwendung als Elektrodenfolie, Elektrolyt in Festkörperbatterien oder Separator für Akkumulatoren oder andere elektrochemische Speicher, eine mit diesem Verfahren herstellbare Folie sowie Anwendungen dieser Folie.

### Stand der Technik

Die Herstellung von Lithium-Ionen-Batterien besteht aus vielen verschiedenen Verfahrensschritten, deren Optimierung ein Kosten sparen kann. Ein Verfahrensschritt bei der Fertigung ist die Herstellung der Elektrodenfolien. Hierzu werden zunächst die Aktivmaterialien zusammen mit verschiedenen Leitfähigkeitsadditiven in einer Bindemittellösung dispergiert. Als Lösungsmittel wird Wasser oder N-Methyl-2-Pyrrolidon (NMP) eingesetzt. Die so entstandene pastöse Masse wird dann in einem weiteren Schritt in einer Beschichtungsanlage über einen Beschichtungskopf auf eine Metallfolie aufgebracht und anschließend getrocknet. Der Nachteil dieser Methode ist, dass der Verfahrensschritt der Trocknung energieintensiv ist und lange Trockenstrecken benötigt werden. Darüber hinaus gilt das verwendete Lösungsmittel NMP gesundheits- und fortpflanzungsgefährdend und daher als besonders besorgniserregender Stoff. Zudem ist aufgrund gesetzlicher Vorgaben der Einsatz von NMP als Lösemittel in der Elektrodenbeschichtung zukünftig ausgeschlossen.

Es sind unterschiedliche Verfahren zur lösungsmittelfreien Herstellung von Elektrodenfolien bekannt. Bei kalanderbasierten Verfahren werden pulverförmige Funktionsmaterialmischungen in einen Walzenspalt eingebracht und ein Film erzeugt, der in einem weiteren Verfahrensschritt auf den Stromkollektor gepresst wird, oder es wird ein Stromkollektor zusätzlich direkt in den Walzenspalt eingeführt, sodass eine fertige Elektrode den Kalander verlässt. Eine weitere Möglichkeit basiert auf Pulversprühverfahren und einem elektrostatisch unterstützten Pulverauftrag, bei dem die Materialmischung in einem hochspannungsinduzierten elektrischen Feld auf den Stromkollektor übertragen wird.

US 2016/181651 A1 beschreibt einen Siebauftrag, bei dem ein Granulat, das Aktivmaterial und Bindemittel enthält, auf einen Stromkollektor gesiebt und anschließend über ein Walzensystem verdichtet wird.

WO 2014/155168 A1 beschreibt ein Verfahren zur Herstellung einer beschichteten Elektrodenfolie, bei dem ein Granulat, das Aktivmaterial und Bindemittel enthält, auf eine Folie aufgestreut werden und anschließend kalandriert wird.

Weiterer relevanter Stand der Technik kann aus US 2012/040243 A1 und US 2005/285080 A1 entnommen werden.

### Durch die Erfindung zu lösende Aufgaben

Die im Stand der Technik bekannten Verfahren sind jedoch aufwändig und langsam und erfordern meist besondere Vorrichtungen, um eine gleichmäßige Beschichtung zu erreichen. Daher ist es die Aufgabe der vorliegenden Erfindung, ein Verfahren bereitzustellen, mit dem eine lösungsmittelfreie und gleichmäßige Beschichtung von Folien auf einfache und effiziente Weise erfolgen kann.

### Zusammenfassende Darstellung der Erfindung

Die Aufgabe wurde durch Bereitstellen eines Verfahrens gelöst, das ein einfaches Auftragen von lösungsmittelfreien Ausgangsmaterialien, ein Schmelzen der Ausgangsmaterialien sowie ein Kalandrieren, gemäß dem unabhängigen Anspruch 1, umfasst. Die bevorzugten Ausführungsformen sind in den abhängigen Ansprüchen offenbart.

Der Gegenstand der vorliegenden Erfindung ist insbesondere in den folgenden Punkten beschrieben:
[1] Verfahren zum Herstellen einer Folie mit Funktionsbeschichtung, die ein Aktivmaterial und ein schmelzbares Polymer enthält, für die Verwendung als Elektrodenfolie, Elektrolyt in Festkörperbatterien oder Separator für elektrochemische Speicher, wobei das Verfahren folgende Schritte umfasst: (a) das Bereitstellen einer Trockenpulvermischung, die (i) Aktivmaterialpartikel und (ii) Partikel eines schmelzbaren Polymers enthält; (b) das Streuen der Trockenpulvermischung auf eine Folie unter Bildung einer pulverbedeckten Folie; (c) das Schmelzen des Pulvers der pulverbedeckten Folie unter Bildung einer mit geschmolzenem Pulver bedeckten Folie; (d) das Kalandrieren der mit geschmolzenem Pulver bedeckten Folie unter Bildung einer kalandrierten Struktur; und (e) das Abkühlen der kalandrierten Struktur unter Bildung der Folie mit Funktionsbeschichtung.
   [1-1] Vorzugsweise liegen die Partikel (i) und/oder (ii) in der in Schritt (a) nach Punkt [1] bereitgestellten Trockenpulvermischung zumindest teilweise als separate Partikel vor.
[2] Verfahren nach Punkt [1] oder [1-1], wobei Schritt (c) vor Schritt (d) ausgeführt wird.
[3] Verfahren nach Punkt [1] oder [1-1], wobei die Schritte (c) und (d) durch Heißkalandrieren gleichzeitig ausgeführt werden.
[4] Verfahren nach einem der vorstehenden Punkte [1], [1-1], [2] oder [3], wobei in der Trockenpulvermischung die volumenbezogene mittlere Teilchengröße D₅₀ der Partikel (i) mehr als 5,0 µm ist und die volumenbezogene mittlere Teilchengröße D₅₀ der Partikel (ii) 5,0 µm oder weniger ist.
   Bevorzugt sind in dem Verfahren nach Punkt [4] die Ausführungsformen gemäß den folgenden Punkten: [4-1] Die Größe der Partikel (i) ist mindestens doppelt so groß wie die Größe der Partikel (ii); [4-2] die Partikel (i) haben eine Größe von mehr als 20 µm.
[5] Verfahren nach einem der vorstehenden Punkte, wobei die Schritte (b) bis (e) kontinuierlich ausgeführt werden.
[6] Verfahren nach einem der vorstehenden Punkte, wobei die Trockenpulvermischung außerdem Leitfähigkeitsadditivpartikel enthält.
[7] Verfahren nach einem der vorstehenden Punkte, wobei die Trockenpulvermischung nach dem Streuen auf die Folie in Schritt (b) und vor dem Schmelzen in Schritt (c) nicht an der Folie haftet und nur durch Einwirkung der Schwerkraft auf der Folie liegt. Die Folienebene muss hier im Wesentlichen senkrecht zur Richtung der Schwerkraft liegen.
   [7-1] Die Kombination der Merkmale der Punkte [1], [1-1] und [7] ist bevorzugt. [7-2] Es kann auch eine Kombination der Merkmale der Punkte [2] und [7], also konkret [1], [2] und [7] oder [1-1], [2] und [7], bevorzugt sein.
[8] Verfahren nach einem der vorstehenden Punkte, wobei das Streuen der Trockenpulvermischung auf die Folie in Schritt (b) bis zum Schmelzen in Schritt (c) der einzige Verfahrensschritt zum Verteilen des Pulvers auf der Folie ist.
   [8-1] Die Kombination der Merkmale der Punkte [7] und [8] ist bevorzugt. [8-2] Die Kombination der Merkmale der Punkte [7-1] oder [7-2] und [8] ist stärker bevorzugt.
[9] Verfahren nach einem der vorstehenden Punkte, wobei Schritt (b) ausgeführt wird, indem die Trockenpulvermischung auf eine Streuwalze aufgetragen wird, von der Streuwalze mittels einer oszillierenden Bürste abgestrichen wird und durch mindestens eine oszillierende Verteilerscheibe auf die Folie fällt.
   Bevorzugt sind die Ausführungsformen gemäß den folgenden Punkten: [9-1] die Kombination der Merkmale der Punkte [9] und [7] oder [7-1] oder [7-2]; [9-2] die Kombination der Merkmale der Punkte [9] und [8-1] oder [8-2]; [9-3] die Kombination der Merkmale der Punkte [9] und [4-1]; [9-4] die Kombination der Merkmale der Punkte [9-2] und [9-3]; [9-5] die Kombination der Merkmale der Punkte [9], [8-2] und [4-1].
[10] Verfahren nach einem der vorstehenden Punkte, das ein Verfahren zum Herstellen einer Metallfolie mit Funktionsbeschichtung für die Verwendung als Elektrodenfolie ist.
[11] Verfahren nach einem der vorstehenden Punkte, wobei das Aktivmaterial mindestens ein Material ist, das aus der Gruppe ausgewählt ist, die aus Metalloxiden, Aktivkohle, Graphit, Metallphosphaten und Siliziumverbindungen besteht, und/oder das schmelzbare Polymer mindestens ein Polymer ist, das aus der Gruppe ausgewählt ist, die aus Polyvinylidenfluorid, Polytetrafluorethylen und Polysiloxanen besteht.
[12] Verfahren nach Punkt [1] oder [1-1], wobei die Schritte (b) bis (e) kontinuierlich ausgeführt werden und Schritt (c) vor Schritt (d) ausgeführt wird.
   Bevorzugt sind die Ausführungsformen gemäß den folgenden Punkten: [12-1] die Kombination der Merkmale der Punkte [12] und [8-1 oder [8-2]; [12-2] die Kombination der Merkmale der Punkte [12] und [9-1]; [12-3] die Kombination der Merkmale der Punkte [12] und [9-2]; [12-4] die Kombination der Merkmale der Punkte [12] und [9-3]; [12-5] die Kombination der Merkmale der Punkte [12] und [9-4] oder [9-5].
[13] Verfahren nach Punkt [1] oder [1-1], wobei die Schritte (b) bis (e) kontinuierlich ausgeführt werden, das Streuen der Trockenpulvermischung auf die Folie in Schritt (b) bis zum Schmelzen in Schritt (c) der einzige Verfahrensschritt zum Verteilen des Pulvers auf der Folie ist und die Schritte (c) und (d) durch Heißkalandrieren gleichzeitig ausgeführt werden.
   Bevorzugt sind die Ausführungsformen gemäß den folgenden Punkten: [13-1] die Kombination der Merkmale der Punkte [13] und [8-1]; [13-2] die Kombination der Merkmale der Punkte [13] und [9-1]; [13-3] die Kombination der Merkmale der Punkte [13] und [9-2]; [13-4] die Kombination der Merkmale der Punkte [13] und [9-3]; [13-5] die Kombination der Merkmale der Punkte [13] und [9-4].
[14] Folie mit Beschichtung, die ein Aktivmaterial und ein Polymer enthält, erhältlich mit einem Verfahren nach einem der vorstehenden Punkte [1] bis [13] und [1-1] bis [13-5].
[15] Verwendung der Folie mit Beschichtung nach Punkt [14] als Elektrodenfolie oder Separator für elektrochemische Speicher.

### Vorteile der Erfindung

Gegenüber lösungsmittelbasierten Verfahren hat das erfindungsgemäße Verfahren den Vorteil, dass durch den Wegfall des Lösungsmittels bei der Beschichtung Materialkosten gesenkt werden und eine Trocknung nicht mehr benötigt wird, wodurch die Kosten gesenkt werden. Durch den Verzicht auf das Lösungsmittel NMP entfällt die ansonsten vorgeschriebene NMP-Rückgewinnung und wird die Umwelt entlastet.

Das erfindungsgemäße Verfahren ermöglicht im Vergleich zu anderen lösungsmittelfreien Verfahren eine einfach herzustellende einheitliche Beschichtung von Folien. Beim Kaltkalandrieren ist durch das Schmelzen des Bindemittels vor dem Kalandrieren eine höhere Geschwindigkeit des kontinuierlich durchgeführten Verfahrens möglich. Beim Heißkalandrieren kann der Schritt des vorherigen Schmelzens entfallen.

Das erfindungsgemäße Verfahren kann für die lösemittelfreie Beschichtung von Elektrodenfolien für Akkumulatoren oder Kondensatoren, von Separatoren für Akkumulatoren oder Kondensatoren, von Elektroden für Festkörperbatterien, von Festkörper-Elektrolyten für Festkörperbatterien oder von hybriden Elektrolyten für Festkörperbatterien eingesetzt werden.

### Ausführungsformen der Erfindung

Mit dem erfindungsgemäßen Verfahren erfolgt die Herstellung der erfindungsgemäßen Folie mit Funktionsbeschichtung.

Die Folie kann ein Stromkollektor sein, beispielsweise eine Metallfolie, und kann als Elektrodenfolie eingesetzt werden. Die Folie kann auch eine poröse Folie sein, beispielsweise eine Kunststofffolie, und kann als Separator für Akkumulatoren oder Kondensatoren eingesetzt werden. Die Folie kann auch eine bereits fertige Elektrodenfolie sein, auf die eine weitere Funktionsbeschichtung aufgetragen wird.

Die Funktionsbeschichtung enthält Aktivmaterial, ein schmelzbares Polymer und ggf. ein Leitfähigkeitsadditiv. Das Ausgangsmaterial der Funktionsbeschichtung ist eine Trockenpulvermischung, in der die Komponenten der Funktionsbeschichtung in Partikelform enthalten sind. Die Aktivmaterialpartikel können hierin einfach als Partikel (i) bezeichnet werden. Die Partikel eines schmelzbaren Polymers können hierin einfach als Partikel (ii) bezeichnet werden. Die für die Herstellung der Trockenpulvermischung eingesetzten Partikel aller Art, also beispielsweise die Partikel (i) und Partikel (ii), werden hierin oberbegrifflich auch als Ausgangsmaterialpartikel bezeichnet.

Bevorzugte Aktivmaterialien für eine positive Elektrode sind Oxide von Lithium und Übergangsmetallen, wie Lithiumnickeloxide, Lithiumcobaltoxide, Lithiummanganoxide und Verbunde dieser Oxide, Phosphate von Lithium und Übergangsmetallen, wie Lithiummanganphosphat und Lithiumeisenphosphat sowie Lithiummanganeisenphosphate. Bevorzugte Aktivmaterialien für eine negative Elektrode sind kohlenstoffhaltige Materialien, wie künstliches oder natürliches Graphit, amorpher Kohlenstoff, Lithiumübergangsmetalloxide und Siliziumverbindungen.

Beispiele des schmelzbaren Polymers sind PVDF (Polyvinylidenfluorid), PTFE (Polytetrafluorethylen) und Polysiloxane.

Beispiele von Leitfähigkeitsadditiven sind Ruß, poröse Kohlestoffen, Kohlenstoffnanoröhren, Graphen, Graphit und Kohlenstofffasern.

Mit dem erfindungsgemäßen Verfahren kann eine lösemittelfreie Beschichtung von Elektrodenfolien für Akkumulatoren oder Kondensatoren, von Separatoren für Akkumulatoren oder Kondensatoren, von Elektroden für Festkörperbatterien, von Festkörper-Elektrolyten für Festkörperbatterien oder von hybriden Elektrolyten für Festkörperbatterien ausgeführt werden. Die erfindungsgemäße Folie mit Beschichtung kann für diese Verwendungen eingesetzt werden.

Die Schritte des erfindungsgemäßen Verfahrens werden nachfolgend beschrieben.

### Schritt (a)

Es wird eine Trockenpulvermischung bereitgestellt, die mindestens Partikel (i) und Partikel (ii) enthält. Zudem können Leitfähigkeitsadditive enthalten sein.

Die Trockenpulvermischung ist trocken und enthält vorzugsweise weniger als 5 Gew-%, stärker bevorzugt weniger als 3 Gew-% Wasser. Die Trockenpulvermischung ist lösungsmittelfrei und enthält damit auch kein organisches Lösungsmittel wie NMP.

Die Trockenpulvermischung kann durch intensive Vermengung bzw. Vermischung der Komponenten erfolgen, z.B. in einer Mühle, wie einer Kugel- oder Mörsermühle, oder einem Planetenmischer. Die Herstellung der Trockenpulvermischung erfolgt lösungsmittelfrei.

Eine Trockenpulvermischung kann als Dry-Blend-Mischung ohne Lösemittel hergestellt werden. Dazu werden dem Mischprozess die eingesetzten Komponenten unter Temperatureinwirkung vakuumgetrocknet, um Restwasseranteile auszutreiben. Dies erfolgt in einem Exsikkator oder einem Vakuumtrockner. Das Mischen der Materialien kann zunächst durch ein diffuses Mischen z. B. mittels eines Trommelmischers, anschließend mittels einer Propellermühle erfolgen. Beim Bindemittelpulver sollte dessen mittlere Partikelgröße vorzugsweise nicht größer als 5 µm liegen, da sonst zu hohe Anteile an Bindemittel eingesetzt werden müssen, um anschließend bei der Auftragung auf die Folie eine ausreichende Haftung zu erhalten. Mit einem Propellermischer können Agglomerate zerschlagen werden, so dass eine Verfeinerung der Partikel erfolgen kann.

Die Partikel der Trockenpulvermischung können als separate Partikel vorliegen, so dass beispielsweise die Ausgangsmaterialpartikel separat vorliegen und nicht durch physikalische oder chemische Wechselwirkungen aneinanderhaften. Partikel der Trockenpulvermischung können aber auch aneinanderhaften und somit größere Einheiten bilden. Beispielsweise können beim intensiven Trockenmischen ggf. unter Erwärmen Granulate entstehen, die Ausgangsmaterialpartikel unterschiedlicher Art, z. B. Partikel (i) und Partikel (ii), enthalten. Die Partikelgrößen in den Granulaten sind im Vergleich zu den Größen der Ausgangsmaterialpartikel vorzugsweise unverändert. Um eine gleichmäßige Auftragung zu gewährleisten, sind die Granulate vorzugsweise klein und enthalten nur wenige Ausgangsmaterialpartikel. Beispielsweise kann ein Granulatpartikel ein Partikel (i) sein, das mit Partikeln (ii) bedeckt ist. Es ist bevorzugt, dass die Partikel (i) und/oder (ii) der in Schritt (a) bereitgestellten Trockenpulvermischung zumindest teilweise, also z. B. zu mindestens 30 Gewichtsprozent oder mindestens 50 Gewichtsprozent in Bezug auf die Gesamtheit der eingesetzten Partikel (i) und (ii), als separate Partikel vorliegen.

Die Ausgangsmaterialpartikel unterschiedlicher Art haben vorzugsweise unterschiedliche Größe. Die Partikelgröße der Partikel (i) ist vorzugsweise 5 µm bis 200 µm, stärker bevorzugt 10 µm bis 100 µm. Die Partikelgröße der Partikel (ii) ist vorzugsweise unter 10 µm, stärker bevorzugt 5 µm oder weniger. In einer erfindungsgemäß verwendeten Trockenpulvermischung sind die Partikel (i) vorzugsweise größer als die Partikel (ii), stärker bevorzugt mindestens doppelt so groß, nach stärker bevorzugt mindestens fünfmal so groß wie die Partikel (ii). Bevorzugt ist eine Kombination von Partikel (i) einer Größe von mehr als 5.0 µm und Partikel (ii) einer Größe von 5.0 µm oder weniger, stärker bevorzugt sind die Partikel (i) mindestens doppelt so groß wie die Partikel (ii). Noch stärker bevorzugt ist eine Kombination von Partikel (i) einer Größe von mehr als 20 µm und Partikel (ii) einer Größe von 5.0 µm oder weniger. Die hierin angegeben Partikelgrößen sind volumenbezogene D₅₀-Werte.

Typische Trockenpulvermischung enthalten 80-99 Massenteile Partikel (i) und 1-20 Massenteile Partikel (ii) in 100 Massenteilen der Summe aus Partikeln (i) und Partikeln (ii).

In der Trockenpulvermischung können die kleineren Partikel (ii) die Zwischenräume der größeren Partikel (i) füllen. Wenn die Trockenpulvermischung teilweise aus separaten Partikeln (i) und (ii) und teilweise aus Granulaten der Partikel (i) und (ii) besteht, können die separaten Partikel, insbesondere die sehr kleinen Partikel (ii), die Zwischenräume füllen. Dadurch kann nach dem Aufschmelzen und anschließendem Abkühlen der Partikel (ii) bzw. der Granulate ein Polymernetzwerk entstehen, das als Bindemittel dient und bei Vorhandensein von eingebetteten Leitfähigkeitsadditiven auch zur Stromleitung geeignet ist.

### Schritt (b)

Die in Schritt (a) hergestellte Trockenpulvermischung wird auf eine Folie gestreut. Das heißt, die Auftragung der Trockenpulvermischung auf die Folie erfolgt ausschließlich unter Einwirkung der Schwerkraft. Andere Kräfte sind bei der Auftragung ausgeschlossen.

Die Trockenpulvermischung wird vorzugsweise über einen Dosiertrichter auf eine Streuwalze aufgebracht, die mit einem speziell strukturierten Belag versehen ist. Eine oszillierende Bürste streicht das Pulver aus der Streuwalze. Um eine Gleichmäßigkeit des Pulverauftrages sowie ein Zerteilen von Klümpchen zu gewährleisten, fällt das Pulver je nach Rieselfähigkeit berührungslos durch mindestens ein oszillierendes Verteilersieb auf die durchlaufende Folie. Die Pulverauftragsmenge lässt sich durch die Umdrehungsgeschwindigkeit der Streuwalze, die Oszillationsgeschwindigkeit der Bürste sowie die Durchlaufgeschwindigkeit der Folie genau einstellen. Je nach verwendetem Aktivmaterial ist aufgrund der unterschiedlichen Partikelgröße und Morphologie eine Anpassung der verwendeten Pulverstreueinheit (u.a. unterschiedliche Streuwalze, Ausbürstbalken, Brückenbrecher) erforderlich.

Bei dem Verfahren unter Einsatz einer Streuwalze und einer Bürste wirken bevorzugt nur geringe Scherkräfte auf die Pulverpartikel. Dies hat den Vorteil, dass die Partikel nicht zu ungleichmäßigen Bruchstücken zerkleinert werden. Solche Bruchstücke hätten eine geringere Rieselfähigkeit und würden somit zu einer ungleichmäßigen Auftragung auf die Folie führen.

Gemäß der Erfindung haftet die Trockenpulvermischung nach dem Streuen auf die Folie in Schritt (b) bis zum Schmelzen in Schritt (c) nicht an der Folie und liegt nur durch Einwirkung der Schwerkraft auf der Folie. Zwischen Schritt (b) und Schritt (c) erfolgen vorzugsweise also keine Maßnahmen, die zu einer physikalischen oder chemischen Wechselwirkung zwischen der Trockenpulvermischung und der Folie und somit zu einer Anhaftung der Trockenpulvermischung an die Folie führen. Dies bedingt, dass die Trockenpulvermischung oben auf der Folie liegt, also in der Richtung, die der Schwerkraft entgegengesetzt ist, so dass das Aufliegen der Trockenpulvermischung auf der Folie unter Einwirkung der Schwerkraft die einzige physikalische Wechselwirkung zwischen der Trockenpulvermischung und der Folie ist. Da die Trockenpulvermischung nach dem Streuen immer noch uneingeschränkt rieselfähig ist, muss die Folienebene im Wesentlichen waagerecht, also senkrecht zur Richtung der Schwerkraft, angeordnet sein. Der Ausdruck "im Wesentlichen" bedeutet eine Abweichung von höchstens 20 °, vorzugsweise höchstens 10 °, noch stärker bevorzugt höchstens 5 °. Besonders bevorzugt kann eine Ausführungsform sein, bei der die Partikel nur durch Einwirkung der Schwerkraft auf der Folie liegen und die Partikel zudem, wie weiter oben beschrieben, zumindest teilweise als separate Partikel vorliegen. Da in dieser Ausführungsform die Partikel auf der Folie rieselfähig und kleiner sind, können die kleineren Partikel die Zwischenräume der größeren Partikel leichter ausfüllen, so dass eine kompaktere Struktur entstehen kann.

In einer bevorzugten Ausführungsform ist das Streuen der Trockenpulvermischung auf die Folie in Schritt (b) bis zum Schmelzen in Schritt (c) der einzige Verfahrensschritt zum Verteilen des Pulvers auf der Folie. Das heißt, dass weitere Maßnahmen zum Verteilen des Pulvers, zum Beispiel mit einer Rakel, ausgeschlossen sind.

### Schritt (c)

Das Schmelzen des Pulvers kann beispielsweise thermisch oder unter IR-Bestrahlung erfolgen. Dabei wird das schmelzbare Polymer, das vorzugsweise ein thermoplastisches Polymer ist, zumindest teilweise geschmolzen. Das Schmelzen in Schritt (c) ist also ein zumindest teilweises Schmelzen. Teilweise schmelzen heißt, dass entweder nur ein Teil der Polymere geschmolzen wird oder die Polymere nicht vollständig geschmolzen, sondern nur erweicht werden. Hierin bedeutet Schmelzen also das Erwärmen auf mindestens die Glasübergangstemperatur T_{g}, und ein geschmolzenes Polymer bedeutet ein Polymer, das auf mindestens seine Glasübergangstemperatur T_{g} erwärmt worden ist. Beispielweise kann das Schmelzen ein Erwärmen auf eine Temperatur zwischen dem Erweichungspunkt und dem Schmelzpunkt des Polymers sein. Das schmelzbare Polymer kann aber auch über seinen Schmelzpunkt erwärmt und damit vollständig geschmolzen werden.

Da das Pulver ein zumindest teilweise geschmolzenes Polymer enthält, weist die in Schritt (c) erhaltene und mit geschmolzenem Pulver bedeckte Folie folglich eine Pulverbedeckung auf, die zumindest teilweise geschmolzen ist.

Das Schmelzen des Pulvers führt zu einem mindestens teilweisen Auflösen der Partikel, insbesondere der Partikel des schmelzbaren Polymers, in der Trockenpulvermischung. Dadurch wird die Oberfläche geglättet und werden Räume zwischen den Partikeln gefüllt, so dass die Pulverschicht auf der Folie kompakter wird. Außerdem klebt dadurch die Pulverschicht an die Folie.

### Schritt (d)

Das feste Verbinden des in Schritt (c) erhaltenen geschmolzenen Pulvers mit der Folie erfolgt in einem Kalander, welcher gegenläufige Walzen mit im Wesentlichen parallelen Drehachsen aufweist. Der Anpressdruck der Walzen ist einstellbar, insbesondere dadurch, dass der Abstand der Drehachsen der beiden Walzen einstellbar ist und/oder die Drehgeschwindigkeit der Walzen einstellbar ist. Die Walzen können beheizbar sein, um eine thermische Fixierung der Funktionsbeschichtung auf der Folie zu bewirken und so die Anhaftung zu erhöhen.

### Schritt (e)

Das Abkühlen erfolgt am einfachsten, indem man die kalandrierte Struktur bei Umgebungstemperatur abkühlen lässt. Alternativ dazu kann auch mit Hilfe einer geeigneten Kühlvorrichtung abgekühlt werden. Beim Kaltkalandieren erfolgt das Abkühlen zumindest teilweise bereits in Schritt (d).

Bezüglich der Schritte (c), (d) und (e) sind die folgenden zwei Varianten möglich.

In Variante 1, gemäß der vorliegenden Erfindung, wird Schritt (c) vor Schritt (d) ausgeführt, z.B. durch Kaltkalandrieren,

Beispielsweise erfolgt in Schritt (c) durch hohe Temperaturen oder andersartigen Energieeintrag (z.B. IR-Bestrahlung) ein zumindest teilweises Schmelzen des Bindemittels und damit eine Vorkontaktierung der Folie mit der Pulverschicht. Das Abkühlen in Schritt (e) kann zumindest teilweise beim Kaltkalandrieren in Schritt (d) erfolgen, so dass die Schritte (d) und (e) zumindest teilweise gleichzeitig ausgeführt werden. Variante 1 kann gegenüber der Variante 2 bevorzugt sein, da das Schmelzen vor dem Kalandrierungsschritt schneller als durch Heißkalandrieren erfolgen kann.

In Variante 2, die nicht Teil der Erfindung ist, werden die Schritte (c) und (d) durch Heißkalandrieren gleichzeitig ausgeführt,

Die Kontaktierung der aufgebrachten Pulvermischung erfolgt also durch das Heißkalandrieren. Variante 2 unterscheidet sich dabei von der Variante 1 im Wesentlichen dadurch, dass das Schmelzen der auf die Folie aufgebrachten Pulvermischung durch ein Heißkalandrieren und nicht durch zwei aufeinanderfolgende Verfahrensschritte erfolgt. Um das Schmelzen zu ermöglichen, muss die Temperatur der Kalanderwalzen entsprechend eingestellt sein. Durch Einsparen eines Verfahrensschrittes kann Variante 2 bevorzugt sein. Durch Einstellen der Temperatur und des Verdichtungsdruckes kann beim Heißkalandrieren die Beschaffenheit der Beschichtung gesteuert werden.

Variante 1 und Variante 2 schließen einander jedoch nicht aus. In einer Ausführungsform kann der Schmelzschritt (c) vor dem Schritt (d) ausgeführt werden und Schritt (d) als Heißkalandrieren ausgeführt werden. Dabei kann beispielsweise in Schritt (c) ein nur teilweise Schmelzen oder Erweichen des Polymers erfolgen, so dass die geschmolzene Schicht auf der Folie nicht zu flüssig wird. Durch diese Kombination können die Vorteile beider Varianten, nämlich der Vorteil der höheren Verfahrensgeschwindigkeit aufgrund des vorherigen Schmelzens und der Vorteil des gleichzeitigen Aufschmelzens unter Druck beim Heißkalandrieren, kombiniert werden.

## Patentansprüche

1. Verfahren zum Herstellen einer Folie mit Funktionsbeschichtung, die ein Aktivmaterial und ein schmelzbares Polymer enthält, für die Verwendung als Elektrodenfolie, Elektrolyt in Festkörperbatterien oder Separator für elektrochemische Speicher, wobei das Verfahren folgende Schritte umfasst:
(a) das Bereitstellen einer Trockenpulvermischung, die (i) Aktivmaterialpartikel und (ii) Partikel eines schmelzbaren Polymers enthält,
(b) das Streuen der Trockenpulvermischung auf eine Folie unter Bildung einer pulverbedeckten Folie, wobei die Trockenpulvermischung nach dem Streuen auf die Folie in Schritt (b) und vor dem Schmelzen in Schritt (c) nicht an der Folie haftet und nur durch Einwirkung der Schwerkraft auf der Folie liegt,
(c) das Schmelzen des Pulvers der pulverbedeckten Folie unter Bildung einer mit geschmolzenem Pulver bedeckten Folie, wobei Schritt (c) vor Schritt (d) ausgeführt wird,
(d) das Kalandrieren der mit geschmolzenem Pulver bedeckten Folie unter Bildung einer kalandrierten Struktur und
(e) das Abkühlen der kalandrierten Struktur unter Bildung der Folie mit Funktionsbeschichtung.

2. Verfahren nach Anspruch 1, wobei in der Trockenpulvermischung die volumenbezogene mittlere Teilchengröße D₅₀ der Partikel (i) mehr als 5,0 µm ist und die volumenbezogene mittlere Teilchengröße D₅₀ der Partikel (ii) 5,0 µm oder weniger ist.

3. Verfahren nach einem der vorstehenden Ansprüche, wobei die Schritte (b) bis (e) kontinuierlich ausgeführt werden.

4. Verfahren nach einem der vorstehenden Ansprüche, wobei die Trockenpulvermischung außerdem Leitfähigkeitsadditivpartikel enthält.

5. Verfahren nach einem der vorstehenden Ansprüche, wobei das Streuen der Trockenpulvermischung auf die Folie in Schritt (b) bis zum Schmelzen in Schritt (c) der einzige Verfahrensschritt zum Verteilen des Pulvers auf der Folie ist.

6. Verfahren nach einem der vorstehenden Ansprüche, wobei Schritt (b) ausgeführt wird, indem die Trockenpulvermischung auf eine Streuwalze aufgetragen wird, von der Streuwalze mittels einer oszillierenden Bürste abgestrichen wird und durch mindestens eine oszillierende Verteilerscheibe auf die Folie fällt.

7. Verfahren nach einem der vorstehenden Ansprüche, das ein Verfahren zum Herstellen einer Metallfolie mit Funktionsbeschichtung für die Verwendung als Elektrodenfolie ist.

8. Verfahren nach einem der vorstehenden Ansprüche, wobei das Aktivmaterial mindestens ein Material ist, das aus der Gruppe ausgewählt ist, die aus Metalloxiden, Aktivkohle, Graphit, Metallphosphaten und Siliziumverbindungen besteht, und/oder das schmelzbare Polymer mindestens ein Polymer ist, das aus der Gruppe ausgewählt ist, die aus Polyvinylidenfluorid, Polytetrafluorethylen und Polysiloxanen besteht.

## Claims

1. A process of producing a foil with a functional coating containing an active material and a meltable polymer, wherein the foil having a functional coating is for use as an electrode foil, an electrolyte in solid-state batteries, or a separator for electrochemical storage, the process comprising the steps of:
(a) providing a dry powder mixture comprising (i) particles of an active material and (ii) particles of a meltable polymer,
(b) scattering the dry powder mixture on a foil to form a powder-covered foil, wherein the dry powder mixture does not adhere to the foil after being scattered onto the foil in step (b) and before melting in step (c) and rests on the foil only by the action of gravity,
(c) melting the powder of the powder-covered foil to form a foil covered with molten powder, wherein step (c) is carried out before step (d),
(d) calendering the foil covered with molten powder to form a calendered structure; and
(e) cooling the calendered structure to form the foil with a functional coating.

2. The process according to claim 1, wherein the volume average particle size D₅₀ of the particles (i) is more than 5.0 µm and the volume average particle size D₅₀ of the particles (ii) is 5.0 µm or less in the dry powder mixture.

3. The process according to any one of the preceding claims, wherein steps (b) to (e) are carried out continuously.

4. The process according to any one of the preceding claims, wherein the dry powder mixture further comprises conductivity additive particles.

5. The process according to any one of the preceding claims, wherein scattering the dry powder mixture on the foil in step (b) is the only process step for distributing the powder on the foil until melting in step (c).

6. The process according to any one of the preceding claims, wherein step (b) is carried out by applying the dry powder mixture to a scattering roller, scraping the dry powder mixture off the scattering roller by means of an oscillating brush, and dropping the dry powder mixture onto the foil through at least one oscillating distribution disc.

7. The process according to any one of the preceding claims, which is a process for producing a metal foil with a functional coating for use as an electrode foil.

8. The process according to any one of the preceding claims, wherein the active material is at least one material selected from the group consisting of metal oxides, activated carbon, graphite, metal phosphates, and silicon compounds, and/or the meltable polymer is at least one polymer selected from the group consisting of polyvinylidene fluoride, polytetrafluoroethylene, and polysiloxanes.

## Revendications

1. Procédé destiné à fabriquer une feuille avec un revêtement fonctionnel qui contient un matériau actif et un polymère fusible pour une utilisation sous forme de feuille d'électrode, d'électrolyte dans des batteries à l'état solide ou de séparateur pour le stockage électrochimique, dans lequel le procédé comprend les étapes suivantes :
(a) fournir un mélange de poudre sèche qui contient (i) des particules de matériau actif et (ii) des particules d'un polymère fusible,
(b) diffuser le mélange de poudre sèche sur une feuille en formant une feuille recouverte de poudre, dans lequel le mélange de poudre sèche après la dispersion sur la feuille à l'étape (b) et avant la fusion à l'étape (c) n'adhère pas à la feuille et repose sur la feuille uniquement par l'action de la gravité,
(c) fusionner la poudre de la feuille recouverte de poudre en formant une feuille recouverte de poudre fusionnée, dans lequel l'étape (c) est réalisée avant l'étape (d),
(d) calandrer la feuille recouverte de poudre fusionnée en formant une structure calandrée et
(e) refroidir la structure calandrée en formant la feuille avec un revêtement fonctionnel.

2. Procédé selon la revendication 1, dans lequel, dans le mélange de poudre sèche, la taille moyenne D₅₀ de particule liée au volume des particules (i) est supérieure à 5,0 µm et la taille moyenne D₅₀ de particule liée au volume des particules (ii) est inférieure ou égale à à 5,0 µm.

3. Procédé selon une des revendications précédentes, dans lequel les étapes (b) à (e) sont réalisées en continu.

4. Procédé selon une des revendications précédentes, dans lequel le mélange de poudre sèche contient en outre des particules d'additif de conductivité.

5. Procédé selon une des revendications précédentes, dans lequel la diffusion du mélange de poudre sèche sur la feuille à l'étape (b) jusqu'à la fusion à l'étape (c) est la seule étape de procédé pour disperser la poudre sur la feuille.

6. Procédé selon une des revendications précédentes, dans lequel l'étape (b) est réalisée en appliquant le mélange de poudre sèche sur un rouleau de diffusion, en l'enlevant du rouleau de diffusion à l'aide d'une brosse oscillante et en le faisant tomber sur la feuille par au moins un disque de répartiteur oscillant.

7. Procédé selon une des revendications précédentes, qui est un procédé destiné à fabriquer une feuille métallique avec un revêtement fonctionnel pour une utilisation en tant que feuille d'électrode.

8. Procédé selon une des revendications précédentes, dans lequel le matériau actif est au moins un matériau qui est choisi dans le groupe constitué d'oxydes métalliques, de charbon actif, de graphite, de phosphates métalliques et de composés de silicium, et/ou le polymère fusible est constitué d'au moins un polymère qui est choisi dans le groupe constitué de fluorure de polyvinylidène, de polytétrafluoroéthylène et de polysiloxanes.
